# EUROPEAN PATENT APPLICATION

(11) **EP 2 337 320 A1**
(43) Date of publication of application: **22.06.2011**
(21) Application number: 09822999.0
(22) Date of filing: 18.05.2009
(51) Int. Cl.: H04M 1/66

(54) **A METHOD, AN APPARATUS, A PROXY SERVER AND A TERMINAL FOR FILTERING THE SPAM CALL**

(30) Priority: 27.10.2008 CN 200810217106
(71) Applicant: Chengdu Huawei Symantec Technologies Co., Ltd., Sichuan 611731 (CN)
(72) Inventor: LIU, Lifeng, Guangdong 518129 (CN); MENG, Jian, Guangdong 518129 (CN)
(74) Representative: Charles, Glyndwr
(86) International application number: PCT/CN2009/071839
(87) International publication number: WO 2010/048806

(57) **Abstract**

A method for filtering out a spam call includes: transmitting test information to a calling terminal when receiving a call request from the calling terminal; determining whether feedback information corresponding to the test information and generated by the calling terminal in a one-key reply manner is correct; if the feedback information is incorrect, determining the call request as a spam call request, and filtering out the call request. An apparatus, a proxy server and a terminal are further provided, so as to effectively determine whether a call request from a calling terminal is a spam call request initiated by a machine or software, therefore improving the security and accuracy of a test, and reducing the cost as there is no need to install a speech recognition system.

## Description

The application claims the benefit of priority to Chinese Patent Application No. 200810217106.1, filed on October 27, 2008, and entitled "METHOD, APPARATUS, PROXY SERVER AND TERMINAL FOR FILTERING OUT SPAM CALL", which is incorporated herein by reference in its entirety.

### FIELD OF THE TECHNOLOGY

The present invention relates to the field of communications technology, and more particularly to a method, an apparatus, a proxy server and a terminal for filtering out a spam call.

### BACKGROUND OF THE INVENTION

As IP network communication services continuously develop, network security becomes a notable problem. In addition to the traditional attack from an unauthorized user, an IP network is also troubled by other security problems, in which an important security problem is Spam over Internet Telephony (SPIT). Spam call is generated in a normal process of signaling and media interaction, but is not intended to pose threat to a network, and the threat is mainly originated from the transferred content which has caused disturbance to a called party. For example, Voice over Internet Protocol (VoIP) currently has various advantages such as low call charge and inexpensive terminal equipment, and therefore many spam calls, for example, lots of calls for advertisements and pyramid sales, overflow in the IP network. In order to seek benefits, a spam call generator initiates a spam call to a lot of called terminals, which receive various uninterested spam content such as advertisements and pyramid sales, after answering this type of spam call, and are therefore greatly disturbed. Meanwhile, spam calls with dial-back charge adsorption property gradually overflow. Herein, the spam calls are calls initiated by a machine or software.

In view of a user, whether a called user answers each call initiated by a spam call generator, the attention of the called user is distracted from other things to the spam call.

In view of an operator, in the first place, the overflow of the spam calls cause the loss of numerous normal VoIP users, which does more harm than good to the operator. In the second place, due to the competition relation between the operators, if benefits are intended to be maximized, their service levels must be improved, and the spam call initiators in the local domain must be strictly controlled, so as to attract more VoIP users. Finally, too many spam calls in the local domain cause that the operators of such spam calls are shut by other operators, and therefore the local domain is segregated and cannot intercommunication with other operator networks. If the spam calls overflow in the networks, enormous hazard will be caused to the operators, including loss of reputation and commercial profit, and bankrupt of the operators in a serious case. Therefore, considering own trade markers and services, the operators should also definitely strictly control the SPIT attack, and effectively check the attempt of the spam call initiators. Therefore, the spam call initiators in the local domain can be strictly detected at one hand, and the spam calls to the local domain users can be effectively screened at the other hand.

Now, the existing method for filtering out a spam call is a Turing test method based on a speech recognition, and the method is speech based, in which after receiving a call request from a calling party, a server does not establish a call connection with a called party immediately, but transmits a speech containing a simple logic question to the calling party; after hearing the question, the calling party will also response in speech; the speech response of the calling party is identified by the speech recognition system installed at a server end so as to match with an answer, if the match result is correct, a call connection with the called party is permitted; or otherwise, the call is terminated.

The inventor found during the implementation of the present invention that the prior art at least has the following disadvantages.

The speech recognition system in the prior art has low accuracy rate for the response from a machine or software as the calling party; and the server needs to install the expensive speech recognition system, thereby spending more money.

### SUMMARY OF THE INVENTION

The embodiments of the present invention provide a method, an apparatus, a proxy server, and a terminal for filtering out a spam call, so as to effectively determine whether a call request from a calling terminal is a spam call request initiated by a machine or software, therefore improving the security and accuracy of a test.

According to an aspect, the present invention provides a method for filtering out a spam call, which includes the following steps.

Test information is transmitted to a calling terminal when receiving a call request from the calling terminal.

It is determined whether feedback information corresponding to the test information and generated by the calling terminal in a one-key reply manner is correct.

If the feedback information is incorrect, the call request is determined as a spam call request, and the call request is filtered out.

According to another aspect, the present invention further provides a detector for filtering out a spam call, which includes a test database, and a detection module.

The test database is configured to store test information.

The detection module is configured to transmit the test information to a calling terminal when receiving a call request from the calling terminal, determine whether feedback information corresponding to the test information and generated by the calling terminal in a one-key reply manner is correct, and determine the call request as a spam call request and filter out the call request if the feedback information is incorrect.

According to another aspect, the present invention further provides a proxy server for filtering out a spam call, which includes a transceiver, and a detector.

The transceiver is configured to receive a call request from a calling terminal.

The detector is configured to transmit test information to the calling terminal through the transceiver, when the transceiver receives the call request, determine whether feedback information corresponding to the test information and generated by the calling terminal in a one-key reply manner is correct, and determine the call request as a spam call request and filter out the call request if the feedback information is incorrect.

According to another aspect, the present invention further provides a terminal for filtering out a spam call, which includes a transceiver and a detector.

The transceiver is configured to receive a call request from a calling terminal.

The detector is configured to transmit test information to the calling terminal through the transceiver, when the transceiver receives the call request, determine whether feedback information corresponding to the test information and generated by the calling terminal in a one-key reply manner is correct, and determine the call request as a spam call request and filter out the call request if the feedback information is incorrect.

In the above method, apparatus, proxy server, and terminal for filtering out a spam call according to the present invention, test information is transmitted to a calling terminal, and it is determined whether feedback information corresponding to the test information and generated by the calling terminal in a one-key reply manner is correct, so as to effectively determine whether a call request from the calling terminal is a spam call request initiated by a machine or software, improve the security and accuracy of a test, and reduce the cost as there is no need to install a speech recognition system.

### BRIEF DESCRIPTION OF THE DRAWINGS

To make the technical solution of the present invention clearer, the accompanying drawings for illustrating the embodiments of the present invention or the prior art are described below. Apparently, the accompanying drawings are for the exemplary purpose only, and person having ordinary skill in the art can derive other drawings from such accompanying drawings without any creative effort.
FIG. 1 shows an application environment of a detector according to a first embodiment of the present invention;
FIG. 2 shows an example of test information according to the first embodiment of the present invention;
FIG. 3 is a flow chart of a method for filtering out a spam call according to the first embodiment of the present invention;
FIG. 4 shows an application environment of a detector according to a second embodiment of the present invention; and
FIG. 5 is a flow chart of a method for filtering out a spam call according to the second embodiment of the present invention.

### DETAILED DESCRIPTION OF THE EMBODIMENTS

The technical solution under the present invention is elaborated below with reference to accompanying drawings. Evidently, the embodiments described below are for the exemplary purpose only, without covering all embodiments of the present invention. Those skilled in the art can derive other embodiments from the embodiments provided herein without making any creative effort, and all such embodiments are covered in the protection scope of the present invention.

In an embodiment of the present invention, a method for filtering out a spam call may include the following steps. Test information is generated by combining an authentication code and an intelligent answer or by speech questioning and transmitted to a calling terminal, when a call request initiated by the calling terminal is received. Meanwhile, it is determined whether feedback information corresponding to the test information and transmitted by the calling terminal is correct; and if the feedback information is incorrect, the call request is determined as a spam call request, and the call request is filtered out. The method for filtering out the spam call may be applicable in a proxy server, a mobile phone terminal, or an intelligent terminal.

The embodiments are described with reference to different application environments below.

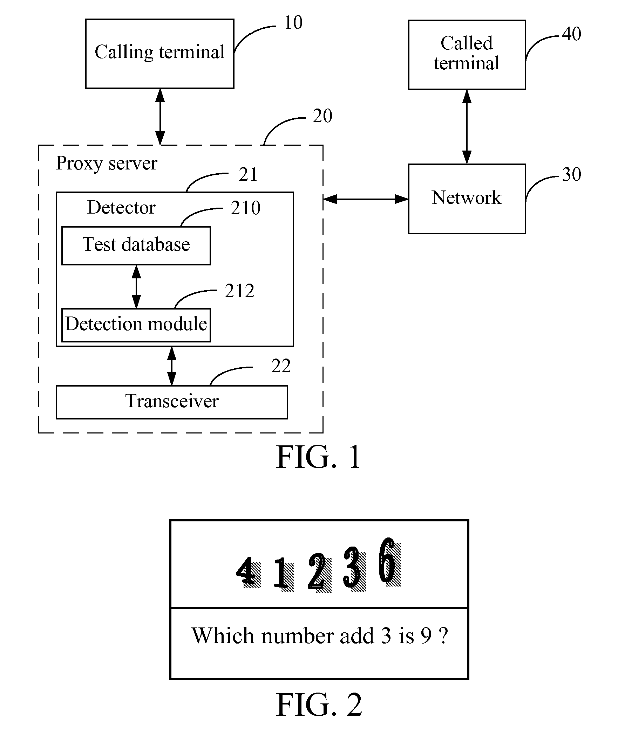

FIG. 1 shows an application environment of a detector according to a first embodiment of the present invention. In the fist embodiment, a calling terminal 10 communicates with a proxy server 20, and the proxy server 20 communicates, through a network 30, with a called terminal 40. The proxy server 20 is configured to generate test information by combining an authentication code and an intelligent answer or by speech questioning and transmit the test information to the calling terminal 10, when receiving a call request initiated by the calling terminal 10. The calling terminal 10 is configured to transmit feedback information in a one-key reply manner when receiving the test information. The proxy server 20 is further configured to determine whether the feedback information from the calling terminal 10 is correct, transmit, through the network 30, the call request to the called terminal 40 if the feedback information is correct, and filter out the call request so as to screen the call request if the feedback information is incorrect. In the first embodiment, the feedback information is an answer to the test information. In the first embodiment, the network 30 may be a VoIP network, a Public Switched Telephone Network (PSTN), a Global System for Mobile Communications (GSM), a Wideband Code Division Multiple Access (WCDMA), or a Time Division-Synchronous Code Division Multiple Access (TD-SCDMA). The calling terminal 10 and the called terminal 40 may be mobile phones, or intelligent terminals.

In the first embodiment, the proxy server 20 includes a detector 21 and a transceiver 22. The transceiver 22 is configured to receive the call request initiated by the calling terminal 10. The detector 21 is configured to generate the test information by combining an authentication code and an intelligent answer or by speech questioning, and transmit the test information to the calling terminal 10 through the transceiver 22 when the transceiver 22 receives the call request initiated by the calling terminal 10. The transceiver 22 is further configured to receive the feedback information transmitted by the calling terminal 10, in which the feedback information corresponds to the test information. The detector 21 is further configured to determine whether the feedback information is correct.

In the first embodiment, the detector 21 includes a test database 210 and a detection module 212. The test database 210 is configured to store the test information generated by combining an authentication code and an intelligent answer or by speech questioning and the answer to the test information. The detection module 212 is configured to acquire the test information from the test database 210, and determine whether the feedback information corresponding to the test information is correct. If the feedback information is correct, the call request is transmitted to the called terminal 40 through the network 30. If the feedback information is incorrect, the call request is filtered out, that is to say, the call request is a spam call request, and needs to be screened. In the first embodiment, when whether the feedback information corresponding to the test information is correct is determined, the feedback information is matched with the answer to the test information stored in the database 210. If the matching is successful, that is, it is determined that the feedback information corresponding to the test information transmitted by the calling terminal is correct, and the call request transmitted by the calling terminal 10 is determined as a call request initiated by a user. If the matching is unsuccessful, it is determined that the feedback information corresponding to the test information transmitted by the calling terminal is incorrect, and the call request transmitted by the calling terminal 10 is determined as a spam call request initiated by a machine or software (that is, a spam call).

In the first embodiment, the test information generated by combining an authentication code and an intelligent answer is a picture of an authentication code combined with an intelligent answer, as shown in FIG. 2. As for this type of picture, the probability of giving a correct answer by a machine is nearly zero. In the first embodiment, various types of test information generated by combining the authentication code and intelligent answer may exist, and the test information in FIG. 2 is provided only for easy illustration. The test information generated by speech questioning may be a question, such as "someone has one apple, and how many apples he has after buying another two apples", and the problem may be complicated if the security of the test information needs to be increased. The calling terminal 10 feeds back an answer to the test information in the one-key reply manner. Through the one-key reply manner, the user answers the test information received by the calling terminal 10 by performing a one-key operation on the calling terminal 10. After the user completes the one-key operation, the calling terminal 10 returns the feedback information corresponding to the test information.

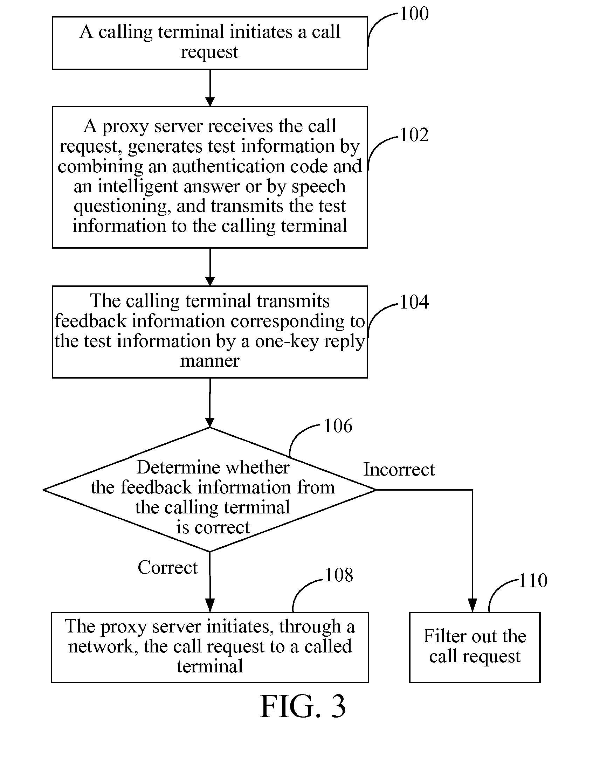

FIG. 3 is a flow chart of a method for filtering out a spam call according to the first embodiment of the present invention. According to the first embodiment, the method includes the following steps:
Step 100: A calling terminal initiates a call request.
Step 102: A proxy server receives the call request, generates test information by combining an authentication code and an intelligent answer or by speech questioning, and transmits the test information to the calling terminal.
Step 104: The calling terminal transmits feedback information corresponding to the test information by a one-key reply manner. The feedback information is an answer corresponding to the test information provided by the calling terminal. Through the one-key reply manner, a user answers the test information received by the calling terminal by performing a one-key operation on the calling terminal. After the user completes the one-key operation, the calling terminal returns the feedback information corresponding to the test information.
Step 106: The proxy server determines whether the feedback information from the calling terminal is correct. In the first embodiment, an answer to the test information corresponding to the feedback information is queried, and matched with the feedback information. If the matching is successful, the call request transmitted by the calling terminal is determined as a call request initiated by a user. If the matching is unsuccessful, it is determined that the feedback information corresponding to the test information transmitted by the calling terminal is incorrect, and the call request transmitted by the calling terminal is determined as a spam call request initiated by a machine or software.

If the feedback information is correct, step 108 is performed, in which the proxy server initiates, through a network, the call request to a called terminal.

If the feedback information is incorrect, step 110 is performed, in which the call request is filtered out, that is, the call request is a spam call request, and needs to be screened.

According to the first embodiment of the present invention, the method, the detector, and the proxy server for filtering out the spam call generate the test information by combining an authentication code and an intelligent answer or by speech questioning, transmits the test information to the calling terminal, and determines whether the feedback information returned by the calling terminal in a one-key reply manner is correct. In this way, it can be effectively determined whether the call request from the calling terminal is a spam call request initiated by a machine or software, the security and accuracy of a test can be improved, and the generation and transmission of the test information are easy. Meanwhile, the user does not need to input a long string of an authentication code because the information is provided in the one-key reply manner, and therefore a user operation is simple, convenient, and easy. In addition, it is unnecessary for detection equipment to be installed with a speech recognition system because the test information is generated by combining an authentication code and an intelligent answer or by speech questioning, and the information is fed back in the one-key reply manner, and therefore reducing the cost.

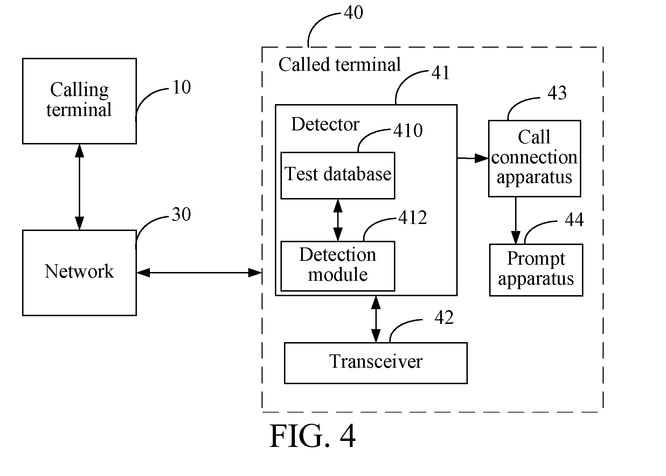

FIG. 4 shows an application environment of a detector according to a second embodiment of the present invention.

The second embodiment is different from the first embodiment in that, no proxy server is provided in the second embodiment, and a detector is disposed on a calling terminal or a called terminal. The called terminal directly detects a call request initiated by the calling terminal.

In the second embodiment, a called terminal 40 includes a detector 41, a transceiver 42, a call connection apparatus 43, and a prompt apparatus 44. In the second embodiment, the calling terminal 10 communicates with a called terminal 40 through a network 30. When the calling terminal 10 initiates a call request to the called terminal 40, the detector 41 on the called terminal 40 receives the call request, generates test information by combining an authentication code and an intelligent answer in combination or by speech questioning, and transmits, through the transceiver 42, the test information to the calling terminal 10. The transceiver 42 is further configured to receive feedback information transmitted by the calling terminal 10, in which the feedback information corresponds to the test information. The detector 41 is further configured to determine whether the feedback information is correct. In the second embodiment, the detector 41 has the same structure and function as those of the detector 21 in the first embodiment, and therefore is not repeated here again. In the second embodiment, the network 30 may be a VoIP network, a PSTN, a GSM, a WCDMA, or a TD-SCDMA. The calling terminal 10 and the called terminal 40 may be mobile phones, or intelligent terminals.

The call connection apparatus 43 is configured to accept the call request when the detector 41 determines that the feedback information is correct. The prompt apparatus 44 is configured to display a phone number of the calling terminal 10 corresponding to the call request, or notify a user of a phone call, after accepting the call request. When the detector 41 determines that the feedback information is incorrect, the call request is filtered out, that is, the call request is a spam call request initiated by a machine or software, and needs to be screened.

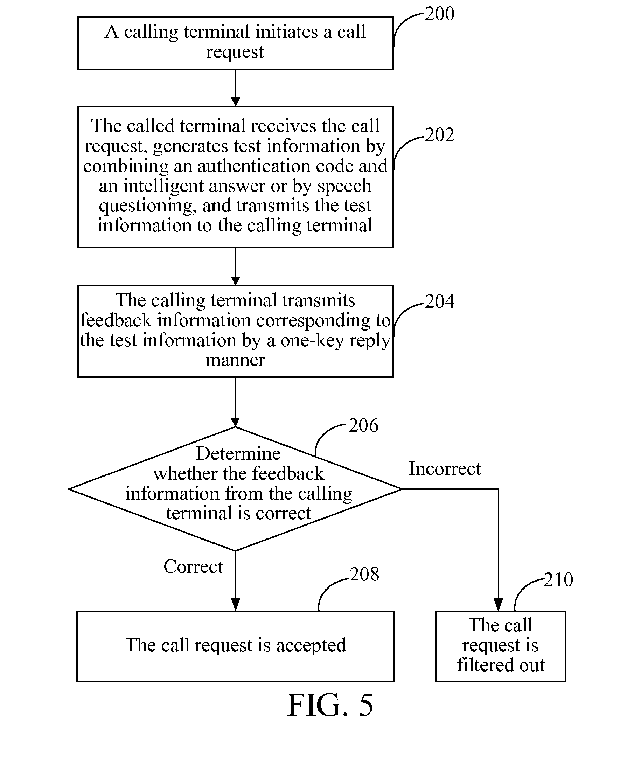

FIG. 5 is a flow chart of a method for filtering out a spam call according to the second embodiment of the present invention. The method includes the following steps:

Step 200: A calling terminal initiates a call request.

Step 202: The called terminal receives the call request, generates test information by combining an authentication code and an intelligent answer or by speech questioning, and transmits the test information to the calling terminal.

Step 204: The calling terminal transmits feedback information corresponding to the test information by a one-key reply manner. The feedback information is an answer corresponding to the test information fed back by the calling terminal. Through the one-key reply manner, a user answers the test information received by the calling terminal by performing a one-key operation on the calling terminal. After the user completes the one-key operation, the calling terminal returns the feedback information corresponding to the test information.

Step 206: The called terminal determines whether the feedback information from the calling terminal is correct. In the second embodiment, an answer to the test information corresponding to the feedback information is queried, and matched with the feedback information. If the matching is successful, it is determined that the feedback information is correct, and the call request transmitted by the calling terminal is determined as a call request initiated by the user. If the matching is unsuccessful, it is determined that the feedback information is incorrect, and the call request transmitted by the calling terminal is determined as a spam call request initiated by a machine or software.

If the feedback information is correct, step 208 is performed, in which the call request is accepted, and a phone number of the calling terminal corresponding to the call request is displayed, or the user is notified of a phone call.

If the feedback information is incorrect, step 210 is performed, in which the call request is filtered out, that is, the call request is a spam call request, and needs to be screened.

According to the second embodiment of the present invention, the method, the detector, and the terminal for filtering out the spam call generate the test information by combining an authentication code and an intelligent answer or by speech questioning, transmits the test information to the calling terminal, and determines whether the feedback information returned by the calling terminal in a one-key reply manner is correct. In this way, it can be effectively determined whether the call request from the calling terminal is a spam call request initiated by a machine or software, the security and accuracy of a test can be improved, and the generation and transmission of the test information are easy. Meanwhile, the user does not need to input a long string of an authentication code because the information is fed back in the one-key reply manner, and therefore a user operation is simple, convenient, and easy. In addition, it is unnecessary for detection equipment to be installed with a speech recognition system because the test information is generated by combining an authentication code and an intelligent answer or by speech questioning, and the information is fed back in the one-key reply manner, and therefore reducing the cost.

Persons of ordinary skill in the art may understand that all or part of the steps of the method according to the embodiments of the present invention may be implemented by a program instructing relevant hardware. The program may be stored in a computer readable storage medium. When the program is run, the processes of the above method embodiments of the present invention are performed. The storage medium may be a magnetic disk, a Compact Disk, a Read-Only Memory (ROM) or a Random Access Memory (RAM).

It should be noted that the above embodiments are provided for merely describing the technical solutions of the present invention, but not intended to limit the present invention. Although the present invention has been described in detail with reference to the foregoing embodiments, it is apparent that person having ordinary skill in the art may make modifications to the technical solutions described in the above embodiments, or may make equivalent replacements to some of the technical features without making the nature of the corresponding technical solutions depart from the spirit and scope of the embodiments of the invention.

## Claims

1. A method for filtering out a spam call, comprising:
transmitting test information to a calling terminal when receiving a call request from the calling terminal;
determining whether feedback information corresponding to the test information and generated by the calling terminal in a one-key reply manner is correct;
if the feedback information is incorrect, determining the call request as a spam call request, and filtering out the call request.

2. The method according to claim 1, wherein the test information comprises test information generated by combining an authentication code and an intelligent answer, or test information generated by speech questioning.

3. The method according to claim 1, wherein the determining whether the feedback information corresponding to the test information and transmitted by the calling terminal is correct comprises:
querying an answer to the test information;
matching the answer with the feedback information;
if the matching is unsuccessful, determining that the feedback information corresponding to the test information and transmitted by the calling terminal is incorrect.

4. A detector (21) for filtering out a spam call, comprising:
a test database (210), configured to store test information; and
a detection module (212), configured to transmit the test information to a calling terminal when receiving a call request from the calling terminal, determine whether feedback information corresponding to the test information and generated by the calling terminal in a one-key reply manner is correct, and determine the call request as a spam call request and filter out the call request if the feedback information is incorrect.

5. The detector (21) according to claim 4, wherein the test information comprises test information generated by combining an authentication code and an intelligent answer, or test information generated by speech questioning.

6. The detector (21) according to claim 4, wherein the detection module (212) is further configured to query an answer to the test information stored in the test database and match the answer with the feedback information, when receiving the feedback information corresponding to the test information and generated by the calling terminal in the one-key reply manner.

7. The detector (21) according to claim 5, wherein the detection module (212) is further configured to determine that the feedback information corresponding to the test information and transmitted by the calling terminal is incorrect, if the matching is unsuccessful.

8. A proxy server (20) for filtering out a spam call, comprising:
a transceiver (22), configured to receive a call request from a calling terminal; and
a detector (21), configured to transmit test information to the calling terminal through the transceiver (22) when the transceiver (22) receives the call request, determine whether feedback information corresponding to the test information and generated by the calling terminal in a one-key reply manner is correct, and determine the call request as a spam call request and filter out the call request if the feedback information is incorrect.

9. The proxy server (20) according to claim 8, wherein the test information comprises test information generated by combining an authentication code and an intelligent answer, or test information generated by speech questioning.

10. The proxy server (20) according to claim 8, wherein the detector (21) is further configured to query an answer to the test information and match the answer with the feedback information, when receiving the feedback information of the calling terminal transmitted by the transceiver (22).

11. The proxy server (20) according to claim 10, wherein the detector (21) is further configured to determine that the feedback information corresponding to the test information and transmitted by the calling terminal is incorrect if the matching is unsuccessful.

12. The proxy server (20) according to claim 10, wherein the detector(21) is further configured to determine that the feedback information corresponding to the test information and transmitted by the calling terminal is correct and transmit the call request to a called terminal corresponding to the call request through the transceiver (22), when the matching is successful.

13. A terminal (40) for filtering out a spam call, comprising:
a transceiver (42), configured to receive a call request from a calling terminal; and
a detector (41), configured to transmit test information to the calling terminal through the transceiver (42) when the transceiver (42) receives the call request, determine whether feedback information corresponding to the test information and generated by the calling terminal in a one-key reply manner is correct, and determine the call request as a spam call request and filter out the call request if the feedback information is incorrect.

14. The terminal (40) according to claim 13, wherein the test information comprises test information generated by combining an authentication code and an intelligent answer, or test information generated by speech questioning.

15. The terminal (40) according to claim 14, wherein the detector (41) is further configured to query an answer to the test information and match the answer with the feedback information, when receiving the feedback information of the calling terminal transmitted by the transceiver (42).

16. The terminal (40) according to claim 15, wherein the detector (41) is further configured to determine that the feedback information corresponding to the test information and transmitted by the calling terminal is incorrect if the matching is unsuccessful.

17. The terminal (40) according to claim 15, further comprising:
a call connection apparatus (43), configured to accept the call request if the matching performed by the detector (41) is successful; and
a prompt apparatus (44), configured to display a phone number of the calling terminal corresponding to the call request or notify a user of a phone call, after accepting the call request.
